# EUROPEAN PATENT APPLICATION

(11) **EP 1 174 795 A1**
(43) Date of publication of application: **23.01.2002**
(21) Application number: 00306145.4
(22) Date of filing: 19.07.2000
(51) Int. Cl.: G06F 11/14, G06F 3/06

(54) **Multiplexing computing apparatus**

(71) Applicant: Hewlett-Packard Company, A Delaware Corporation, Palo Alto, CA 94304 (US)
(72) Inventor: Jenns, Anna Louisa, Bradley Stoke, Bristol BS32 0LW (GB)
(74) Representative: Lawman, Matthew John Mitchell

(57) **Abstract**

A method of multiplexing at least two computing apparatus to a storage apparatus comprising connecting each of the computing apparatus to a multiplexing device by a bus interface of each of said computing apparatus, sending data from each of said computing apparatus and arranging said multiplexing device to multiplex said data to a storage apparatus, arranging said multiplexing device to track the origin of said received data and storing said data on said storage apparatus associated with said multiplexing device. An apparatus for performing said method is also disclosed. The multiplexing device is primarily intended to connect to the computing apparatus via a SCSI bus but has wider application.

## Description

This invention relates to multiplexing computing apparatus, including but not limited to an apparatus and a method for such multiplexing.

For convenience of description herein, the term "computing apparatus" means any computer apparatus. In particular but not exclusively, it is intended to cover computers capable of making use of the Small Computer Systems Interface (SCSI). Examples of such apparatus are those based on the Intel™ microprocessors (or equivalents) such as the Pentium™, etc. and the Apple™ Mac series of computers.

It is convenient to describe this invention in relation to the backing up of data. It will however, be appreciated by the skilled person that it has wider application and in its broadest aspects comprises multiplexing computing apparatus to a storage apparatus.

It is well known that it is prudent to back up data stored on the primary storage apparatus, such as a hard disk, of a computing apparatus. Such back ups allow data to be recovered in the event of a disaster that otherwise may have destroyed some or all of the data. Disasters include failure of the primary storage apparatus, fire, computer virus or simply the accidental deletion of the data. The term data is intended to cover both information generated by use of software running on the computing apparatus and also the software itself.

It is now common place to network together a number of computing apparatus allowing data to be transferred between computing apparatus. However, connections forming said network have a finite bandwidth and can therefore, only pass a finite amount of data in any given period.

It is also common for data present on computing apparatus in the network to be passed across the network connections so that it can be backed up centrally. In some network configurations a dedicated server is provided to back up data from other servers provided on the network.

Therefore, using the network connection to pass data that is to be backed up takes up some of the bandwidth of the network connection. In some instances this use of the network connection can greatly reduce the performance of the network. It may therefore, be desired to have a greater number of devices to provide a back up function in order to reduce the performance hit on the network. However, it will be appreciated that increasing the number of back up devices can substantially increase the cost of the required hardware. There therefore exists two opposing requirements: wanting to perform a back up operation but not wanting to reduce the performance of the network or to spend too much on back up hardware.

It is an aim of the present invention to provide a solution that reduces or perhaps removes these opposing requirements.

According to a first aspect of the invention there is provided a method of multiplexing at least two computing apparatus to a storage apparatus comprising:
connecting each of the computing apparatus to a multiplexing device by a bus interface of each computing apparatus;
sending data from each of the computing apparatus and arranging the multiplexing device to multiplex said data to a storage apparatus;
arranging said multiplexing device to track the origin of said received data;
and storing said data on said storage apparatus associated with said multiplexing device.

The method may be used to back up data held on each computing apparatus.

Such a method can be used to store data either from two or more computing apparatus which are networked together by a network in addition to bus connection to the multiplexing device, or from two or more otherwise un-networked computing apparatus. (It would of course also be possible to network a number of computing apparatus that are not networked together with a number of computing apparatus that have been networked). However, if the computing apparatus are already networked the method can be used to back up data without reducing the network performance of the existing network connection (other than that due to the use of resources of the computing apparatus in running the method).

In the preferred embodiment the computing apparatus are connected to the multiplexing apparatus by a SCSI bus. However, other types of bus may be used and any one of the following buses may be suitable: fibre channel, USB, serial, parallel. Indeed, any format of connection allowing connection of a plurality of devices/computing apparatus may be suitable for the bus interface.

The storage apparatus may be connected to the multiplexing device or may be provided within the multiplexing device. If the storage apparatus is connected to the multiplexing device it may or may not be connected to the multiplexing apparatus by the same format of bus that the computing apparatus are connected to the multiplexing device.

Conveniently, the method comprises buffering data received from the computing apparatus in a random access memory associated with the multiplexing device. The memory may be any one of the following: memory, hard disc drive, tape drive, or the like.

In the most preferred embodiment data sent from at least one of the computing apparatus (which may be the buffered data) is held in a format corresponding to a CD-ROM format (creating a CD-ROM image). Such an arrangement is advantageous for a number of reasons. In particular it may allow the multiplexing device to function as an Initial Program Load Device (IPLD) as discussed in published patent specification WO 00/08561. The skilled person is directed to read the contents of WO 00/08561 and its contents are hereby incorporated by reference. Further, holding the buffered data in this format may make it more convenient to access data in the random access memory.

The skilled person will appreciate that it is possible to boot a computer from a CD-ROM drive, as long as the CD-ROM complies with ISO 9660 CD-ROM standard, as extended by the "El Torito" Bootable CD-ROM Format Specification, Version 1.0 January 25, 1995, created jointly by IBM Corporation and Phoenix Technologies Ltd. Booting from CD-ROM in a similar manner is also considered in detail in US 5 727 213. As described, to boot from CD-ROM, a PC's BIOS (basic input/output system) needs to specifically support reading boot record data from a CD-ROM, typically, as well as from a floppy disk or hard disk. The skilled person will appreciate from the prior art how to modify data written to tape to allow a tape drive to act as a boot source. To date however, PC BIOS standards do not support booting from tape media.

The CD-ROM format may be a bootable CD-ROM format as defined in the "El Torito" Bootable CD-ROM Format Specification, Version 1.0 January 25, 1995. Alternatively, the CD-ROM format may correspond to any other, non bootable CD-ROM format (such formats include those in the Red, Yellow, Orange, White, Green book standards).

A CD-ROM image may be created for each of the computing apparatus that is connecting to the multiplexing device. Alternatively, or additionally, a single CD-ROM image may be created containing information from each of the computing apparatus that is connected to the multiplexing device. The skilled person will appreciate that it would be possible to arrange the method to utilise a number of CD-ROM images at any intermediate point between these two extremes.

Preferably to track the origin of the data the multiplexing device maintains a record of from where the data sent to the multiplexing device originates. Such a record is advantageous because it allows access to the data to be controlled and further, it facilitates restoration of the data.

In addition to, or as an alternative to maintaining a record of from where the data sent to the multiplexing device originates the multiplexing device may also add origin information to data sent to the storage apparatus. Such origin information also allows data to be returned to its point of origin.

The multiplexing device may maintain the record of from the where the data originates by keeping a plurality of tables. Data may be sent to the multiplexing device in packets of fixed length. A table may be created in relation to each computing apparatus connected to the multiplexing device and be arranged to track the contents of each packet sent thereto.

Further, an overall summary table may be created maintaining a record of the contents of data packets sent to the storage apparatus.

Alternatively, or additionally, the record of from where the data originates may be kept by maintaining a database. The database may record the contents of data packets sent to the multiplexing device and may further record the contents of each data packet sent to the storage apparatus.

The record of how data stored on the storage apparatus relates to information sent to the multiplexing apparatus may itself be sent to the storage apparatus. This is advantageous because it helps to increase the security of backed up data; if the record is lost then it will be difficult to restore any backed up data.

The skilled person will appreciate that if a computing apparatus is to be booted using data multiplexed to a storage apparatus according to the method of the invention then data must be provided in the correct format to allow booting to occur. The method may store data on the storage apparatus in the correct format. Alternatively the multiplexing device may format data held on the storage apparatus to the correct format before sending the information to the computing apparatus being booted.

The method may allow any one of the computing apparatus connected to the multiplexing device to be booted from its connection to the multiplexing device. Such a method is advantageous because it allows the multiplexing device to be used in disaster recovery operations in order to restore an operating system to the computing apparatus. The necessary requirements for allowing this method to be performed are discussed in WO 00/08561.

The method may provide the multiplexing device with an activation means, which may be a switch, button, or the like, which when activated allows a computing apparatus to be booted from the connection to the multiplexing device.

Alternatively, or additionally, the multiplexing device may monitor the bus connecting the device to each computing apparatus, detect that one or more of the computing apparatus is attempting to boot and enter a mode allowing the computing apparatus to be booted therefrom. Such an arrangement is convenient since it allows the boot sequence to be performed with less user intervention. If the multiplexing device monitors the bus to determine that one or more of the computing apparatus is attempting to boot therefrom the identity of the computing apparatus may be obtained from the protocols operating the bus; for example on a SCSI bus each device on the bus has a unique identity.

Monitoring of the bus may comprise monitoring for access to a specific portion of the data held on the multiplexing device. It will be appreciated that boot data is held in specific locations of Initial Program Load Devices (IPLD's) and monitoring the bus may detect an attempt to read such a location.

In some embodiments the method allows access to the data held in the memory of the multiplexing device to be restricted to certain of the computing apparatus. Alternatively, or additionally, the method may allow access to be restricted to data held in the storage apparatus connected to the multiplexing device. Such restrictions may comprise allowing a computing apparatus access only to the data that originated from that computing apparatus. Alternatively, the method may allow restrictions to be user defined or in some other predetermined manner. Such restrictions may be set in substantially the same manner as permissions are defined on networks allowing users access to predetermined files and folders.

The method may allow access to data that has been multiplexed by said multiplexing device by file manipulation software of the computing apparatus. For example if the computing apparatus is running the Microsoft™ Windows™ operating system then the multiplexing device may allow Explorer™ to access the data and may further provide drag and drop data movement for this file manipulation software. The skilled person will appreciate that this allows an operator to graphically drag a file on the Windows™ Graphical User Interface (GUI) onto a representation, or icon, of the multiplexing device.

Each of the computing apparatus connected to the multiplexing device may have software running thereon arranged to control communication with the multiplexing device. Such software is advantageous because it allows the multiplexing device to function with a plurality of different computing apparatus. Such software is commonly referred to as driver software.

Software running on the computing apparatus may be arranged to send files to the multiplexing device after that file has been modified. The phrase "after a file has been modified" is intended to cover situations wherein the file has been opened and then closed by a computing apparatus and also the situation wherein the file is still in an open state by a computing apparatus and backed up suitable instances. A file may contain any form of data including programs. Such an arrangement may be referred to as a trickle back up and is advantageous because it maintains an up to date version of the files on any one of the computing apparatus with little user intervention. A trickle back up is a form of incremental back up as will be appreciated by the person skilled in the art.

The method may further include performing a full back up of the files on one or more of the computing apparatus followed by subsequent trickle back up of that apparatus. Such a method is convenient because it provides a convenient image (the full back up image) from which any file can be recovered with the trickle back up backing up any files that are modified thereafter, so providing an up to date back up. The term full back up will be readily apparent to the person skilled in the art, but for the avoidance of doubt covers back ups in which all of the files that have been selected for the back up are copied to the storage apparatus rather than simply those files that have been altered since the last back up (which is termed an incremental back up).

In some embodiments the trickle back up may be performed for a predetermined time before a full back up is performed. Performing a full back up is advantageous because if provides a back up from which it is simpler to restore information when compared to incremental back ups.

The storage apparatus may be a tape drive. The skilled person will appreciate that tape media is advantageous because it has a low cost and is robust.

The method may comprise connecting a tape drive to the multiplexing device. Alternatively, or additionally, the tape drive may be provided within the multiplexing device.

A plurality of tape drives may be provided which may be arranged in a RAIT (Redundant Array of Inexpensive Tapes). The skilled person will appreciate the greater data security and speed that can be afforded by such an array.

Tape drives provided by the method may be SCSI based.

Alternatively, or additionally, data may be backed up to any other suitable form of media. In particular such media may be any one of the following: CD-ROM, WORM drives, hard drive, DVD based media.

In yet another alternative embodiment the method may provide code, which causes a tape drive (or other storage apparatus) to provide the method. As such, the tape drive (or other storage apparatus) may include the multiplexing device. Providing code in this manner may include reprogramming an existing tape drive (or other storage apparatus) or may be providing a dedicated tape drive (or other storage apparatus).

It will be readily apparent to the person skilled in the art that the method may be run on computing apparatus running a variety of operating systems. For example the method may be run on computing apparatus running any one of the following: DOS, Microsoft™ Windows™, Microsoft™ NT™, UNIX, BeOS™, MACOS™, or the like. The computing apparatus connected to the multiplexing device may be running the same operating system (homogeneous) or the computing apparatus may be running a mixture of operating systems (heterogeneous).

According to a second aspect of the invention there is provided a multiplexing device comprising:
an input interface capable of connecting to at least two computing apparatus;
a processor arranged to direct data received by the input interface to an output;
a memory arranged in conjunction with said processor to track the origin of data received at the input interface enabling said received data to be returned to its origin; and
said output being associated with a storage apparatus such that data received by the device is output to said storage apparatus, the arrangement being such that data stored on the storage apparatus can be returned to its origin.

An advantage of such an apparatus is that it allows at least two computing apparatus to be connected via the multiplexing device to a single storage apparatus. This connection may be used for the purposes of backing up data or more generally simply for storage.

Preferably, the input interface is capable of connecting to a SCSI bus. The use of such a bus is advantageous because it is a bus that is commonly provided on computing apparatus and yet is a bus that is often unused. Therefore, such a multiplexing device can often be used connect a storage apparatus simply and without the need for the addition of specific hardware to the computing apparatus.

Alternatively, or additionally, the input interface may be capable of connecting to any one of the following buses: fibre channel, USB, Firewire, serial, parallel, EIDE/IDE.

In a preferred embodiment the device has a second SCSI interface allowing a storage apparatus to be connected to the device.

Alternatively, or additionally, the multiplexing device may have a storage apparatus provided therein arranged to store data received from computing apparatus connected to the multiplexing device.

The storage apparatus provided within the device (or indeed external to the device) may be any one of the following: tape drive, CD-ROM, DVD, WORM, magneto-optical storage, hard drive, memory, or any other form of media. The storage apparatus may be provided in an array (for example a RAID, or RAIT). The skilled person will appreciate the benefits of such an array.

A random access memory may be provided to hold instructions for the processor, which is conveniently non-volatile memory such as EEPROM, or the like as will be appreciated to the person skilled in the art. An erasable or modifiable non-volatile memory is advantageous because it allows the functionality of the multiplexing device to be altered.

The memory within the apparatus is in perhaps the preferred embodiment a volatile Random Access Memory, providing a convenient arrangement in which to store the origin of the data. It will of course be appreciated that the memory may be any other form of storage capable of storing such information and may be a hard drive, or the like. Indeed, a storage apparatus provided within the device may provide the memory.

According to a third aspect of the invention there is provided a system comprising two or more computing apparatus, a storage apparatus and a multiplexing device, each of the computing apparatus being connected to the multiplexing device using a bus and the multiplexing device multiplexing the computing apparatus to the storage apparatus with the multiplexing device arranged to track the origin of the data sent from the computing apparatus.

Such a system is advantageous because it allows the bus to be multiplexed and therefore, used to connect a number of computing apparatus, which has not been previously possible.

Conveniently the storage apparatus is a tape drive. There may be a plurality of tape drives arranged in an array. Alternatively, or additionally, the storage apparatus may any other suitable form of storage apparatus including any one of the following: CD-ROM, DVD, WORM, magneto-optical storage, hard drive, any other form of media.

Preferably, the storage apparatus is connected to the multiplexing device by a SCSI bus. However, any other form of connection may also be suitable including any one of the following: serial, parallel, USB, Firewire, Fibre-channel.

In the preferred embodiment the computing apparatus are networked together by a primary network in addition to the SCSI bus network connecting them to the multiplexing device. Such an arrangement is convenient because it allows back ups to be performed for the computing apparatus without reducing the performance of the primary network.

According to a fourth aspect of the invention there is provided a computing apparatus readable medium having stored therein instructions for causing a processing unit to execute the method of the first aspect of the invention.

Such a computing apparatus readable medium may include programmed memory circuits, discs, CD-ROM's, DVD's, hard drives, and the like.

According to a fifth aspect of the invention there is provided a computer program arranged to execute the method according to the first aspect of the invention.

There now follows by way of example only a detailed description of the invention with reference to the accompanying drawings of which:
**Figure 1** shows a schematic block diagram showing a network of computing apparatus configured according to the present invention;
**Figure 2** shows a schematic block diagram of one of the computing apparatus shown in Figure 1;
**Figure 3** shows a schematic block diagram of a multiplexing device according to the present invention;
**Figure 4** shows a representation of how one embodiment of the invention tracks information sent to the multiplexing device;
**Figure 5** shows a block diagram for one embodiment the software running on the computing apparatus; and
**Figure 6** shows a block diagram for one embodiment of the software running on the multiplexing device according to the invention.

There will now be described by way of example only the best mode contemplated by the inventors for carrying out the invention. In the following description numerous specific details are set forth in order to provide a thorough understanding of the present invention. It will be apparent however, to one skilled in the art, that the present invention may be practised without using these specific details. Also, well-known methods and structures have not been disclosed in detail so as not to unnecessarily obscure the present invention.

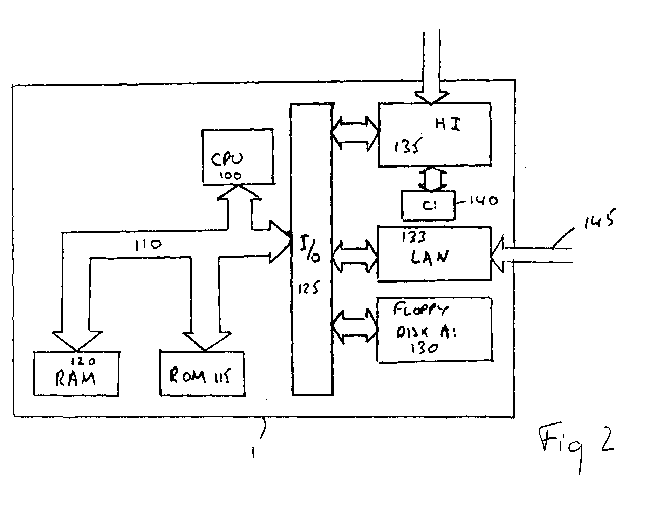

Figure 2 is a block diagram, which illustrates four PC's 1, 2, 3, 4, (each a computing apparatus) connected to each other via a Local Area Network 6 (LAN) and Small Computer Systems Interface (SCSI) bus 8. The SCSI bus 8 is also connected to a multiplexing unit 10.

In the present embodiment the PC's 1,2,3,4 communicate with the multiplexing device 10 using one of the well-known SCSI protocols, such as SCSI-3. The SCSI protocols will not be described further since these will be readily apparent to those skilled in the art.

The basic components of one of the PC's 1,2,3,4 are shown in Figure 2 which include a CPU 100 (Central Processing Unit), which is in communication, via a bus 110 with a ROM 115 (Read Only Memory), RAM 120 (Random Access Memory) and an I/O (Input/Output) subsystem 125.

The I/O subsystem 125 connects the PC 1 to a number of storage and communication devices, namely, a floppy disk drive 130, a network adapter card 133 and via a SCSI HI (host interface) 135, a hard disk drive 140.

In practise, the bus 110 may comprise multiple busses and respective bus subsystems; for example, host bus, PCI bus, EISA bus, X bus, Y bus, etc. However, these are well documented elsewhere and have not illustrated for reasons of brevity of description only. The I/O subsystem 125 in a typical PC will generally also comprise one or more serial interfaces (including USB), parallel interfaces. video interfaces, mouse interfaces and respective subsystems or adapters, none of which are shown for reasons of simplicity only.

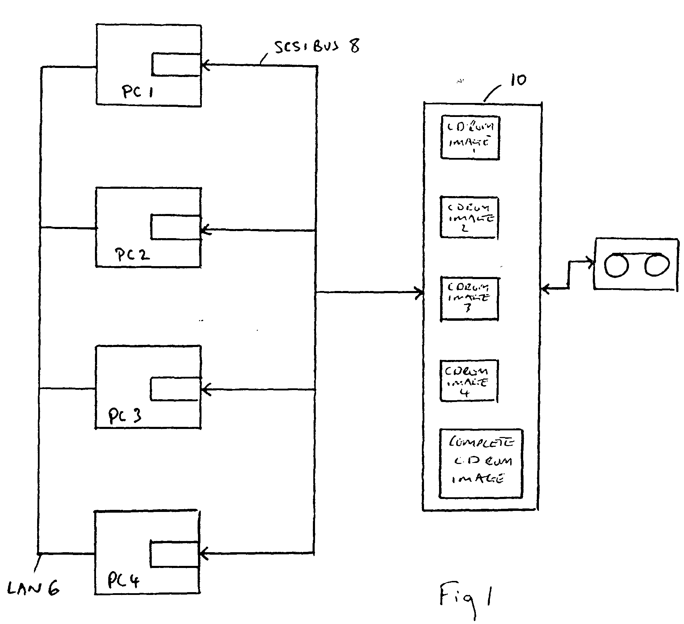

In addition the PC 1 shown in the Figure has a network adapter card 133 in communication with the I/O subsystem 125 allowing the PC 1 to communicate across a network 145. As will be appreciated the network can take a number of different formats but in one example can be an Ethernet network running at 100kbits/s. As can be seen in Figure 1 each of the four PC's 1,2,3,4 shown is connected together by the Ethernet LAN 6.

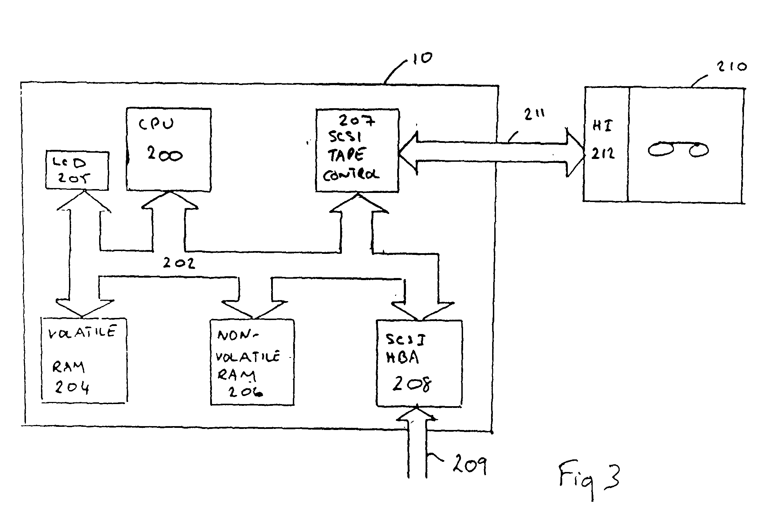

As shown in Figure 1 each of the four PC's is connected via the SCSI bus 8 to the multiplexing device 10 of the embodiment being described.. This multiplexing device is shown in greater detail in Figure 3 and comprises a CPU 200 communicating via a bus 202 with a volatile RAM 204, a non-volatile RAM 206, a SCSI HBA (Host Bus Adapter) 208, with a configurable identity number, allowing computing apparatus to be connected to the multiplexing device, and a SCSI tape controller 207. A SCSI bus 209 connects the HBA 208 to the computing apparatus, and a SCSI bus 211 connects the SCSI tape controller 207 to a tape drive 210. An LCD display 205 is provided and is arranged to display status and error messages relating to the functioning of the multiplexing device 10.

The tape drive 210 has a host interface 212 allowing it to be connected to the SCSI tape controller 207 of the multiplexing device 10. As will be explained hereinafter the tape drive 210 can be any form of SCSI tape drive, and for example may be any of the following: DAT (Digital Audio Tape), DLT (Digital Linear Tape), DDS (Digital Data Storage), or LTO (Linear Tape Open).

It will be appreciated that in the latest SCSI specification a total of sixteen devices can be connected to the SCSI bus and that the maximum bus length can be 25m. Therefore, counting the multiplexing device 10 as one device, fifteen computing apparatus can be connected to a single multiplexing device 10. Providing a separate SCSI bus 211 to which the tape drive 210 is connected is convenient because it increases by one the number of computing apparatus that can be connected to the multiplexing device 10. The multiplexing device 10 therefore, multiplexes a number of computing apparatus 1,2,3,4 to a single tape drive 210 so that data from the computing apparatus can be sent to the tape drive 210, perhaps for back up purposes.

The non-volatile RAM 206 within the multiplexing device 10 holds the code for controlling the operation of the CPU 200 of the multiplexing device. (The non-volatile RAM 206 could be E²ROM, or could be battery backed RAM. In some embodiments the non-volatile RAM 206 could be replaced with a ROM). The multiplexing device 10 is programmed to appear to the computing apparatus 1,2,3,4 to which it is connected as a CD-ROM drive. As will be appreciated by the skilled person a CD-ROM drive is a generic device that is provided with specific SCSI commands. The computing apparatus 1,2,3,4 can therefore, rely on a standard instruction set to communicate with the multiplexing device 10.

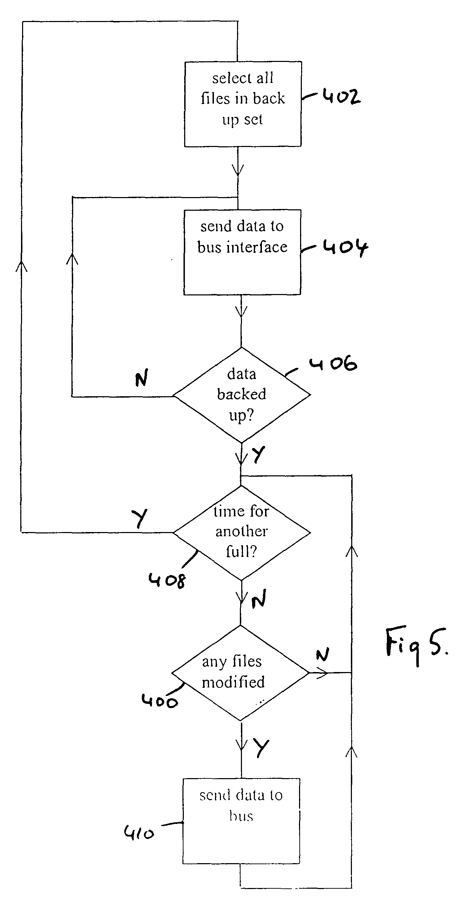

Each of the computing apparatus 1,2,3,4 which are connected to the multiplexing device 10 are loaded with driver software that executes in the background whilst that computing apparatus is in operation and a flow diagram showing the functionality of one embodiment of the driver software is shown in Figure 5. In the most preferred embodiment the driver causes a trickle back up of the data held on the hard drive 140 of that computing apparatus 1,2,3,4 to be performed. That is, as files are modified 400 they are sent to the multiplexing device 10 so that the new, modified, file can be recovered if necessary. Such a trickle back up is advantageous since there is a low performance hit on the computing apparatus 1,2,3,4 and is an on going process that does not need to be specifically started and therefore, there is a reduced risk of files being lost due to not being backed up.

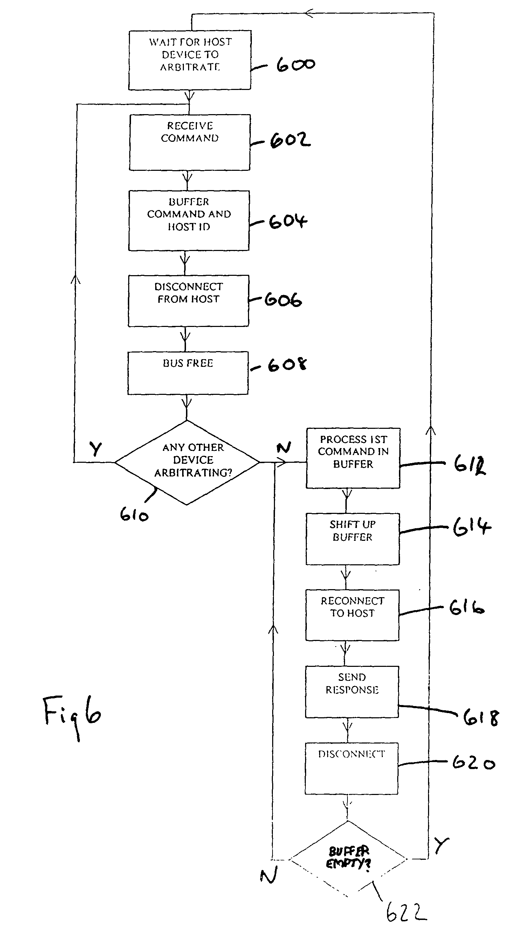

In the embodiment shown in Figure 5 a full back up of each computing apparatus is performed once the multiplexing device has been activated. To achieve this files in a predefined back up set are selected 402 and the process loops until all of this data has been sent to the multiplexing device 404, 406. The multiplexing unit functions according to the flow diagram in Figure 6, which is described hereinafter. Once the full back up has been performed a further loop is entered which periodically initiates a full back up 408 but otherwise maintains a trickle back up sending any modified files to the multiplexing device 410.

As files are sent to the multiplexing device 10 from each of the computing apparatus 1,2,3,4 they are stored in the volatile RAM 204 of the multiplexing device as a CD-ROM image. In the basic arrangement, a single CD-ROM image is maintained within the multiplexing device 10 with data from each of the computing apparatus 1,2,3,4 stored therein. Some form of allocation, or file tracking, is utilised to track in which part of the CD-ROM image data from each of the computing apparatus is stored.

In perhaps the preferred embodiment as shown in Figure 1 a separate CD-ROM image is maintained for each of the computing apparatus 1,2,3,4 connected to the multiplexing device 10 along with a complete image comprising a combination of the other images.

The multiplexing device 10 is programmed to appear as an additional drive to each computing apparatus 1,2,3,4. In the preferred embodiment the driver software running on each computing apparatus is arranged such that the contents of the volatile RAM 204 and/or tape drive can be accessed via the standard file management software of the computing apparatus 1,2,3,4. For instance if the computing apparatus is running Microsoft™ Windows™ the files held within the volatile RAM 204 may be accessed using Explorer. Drag and drop functionality may be provided allowing simple file manipulation.

The CPU 200 of the multiplexing device controls the back up process and keeps track of where data received from each of the computing apparatus 1,2,3,4 to which it is connected is stored. The multiplexing device 10 can only receive data from one computing apparatus 1,2,3,4 at a time and therefore, the multiplexing device CPU 200 controls the SCSI bus receiving data from each of the computing apparatus 1,2,3,4 at a predetermined time.

A flow diagram for the one embodiment of the process running on the multiplexing device is shown in Figure 6. The multiplexing device waits in an initial state 600 for a communication on the bus connecting it to the computing apparatus 1,2,3,4. When a communication occurs the command arriving across the bus is received 602. Next the received command together with the identity of the computing apparatus 1,2,3,4 that send that command is buffered 604. The bus connection to the computing apparatus 1,2,3,4 is then broken 606 so that the bus is free for other computing apparatus to use 608. The multiplexing device then ascertains whether any of the other computing apparatus 1,2,3,4 are attempting to communicate over the bus 610. If this is the case then the command is received 602.

If no other computing apparatus 1,2,3,4 is trying to use the bus then the multiplexing device processes the first command in its buffer 612. The buffer pointer is then incremented accordingly 614. The multiplexing device then reconnects to the computing apparatus that has sent that command 616 and responds 618 appropriately perhaps by receiving data to be backed up. Once the command has been processed the multiplexing unit disconnects from the bus 620. Finally, the multiplexing unit checks to see if it has processed all of the commands in its buffer 622. If is not the case then the next command is processed 612 whereas if the buffer is now empty the multiplexing device returns to waiting for a bus arbitration to occur 600.

Thus, to each of the of the computing apparatus 1,2,3,4 the back up process appears continuous with the driver software running on a particular one of the systems simply sending out data as it needs to be backed up. The multiplexing device CPU 200 tracks where data sent to it from a particular computing apparatus 1,2,3,4 is stored. This tracking makes data accessible by that computing apparatus and is performed by maintaining an allocation table or the like tracking where data is held. Because this is the case the multiplexing unit CPU 200 can interrupt data transfer from a particular one of the computing apparatus 1,2,3,4 whilst it is transferring a file, etc. by issuing a disconnect command. (Each of the computing apparatus does not need continuous access to the multiplexing device since the multiplexing device itself tracks where each portion of the data is stored.)

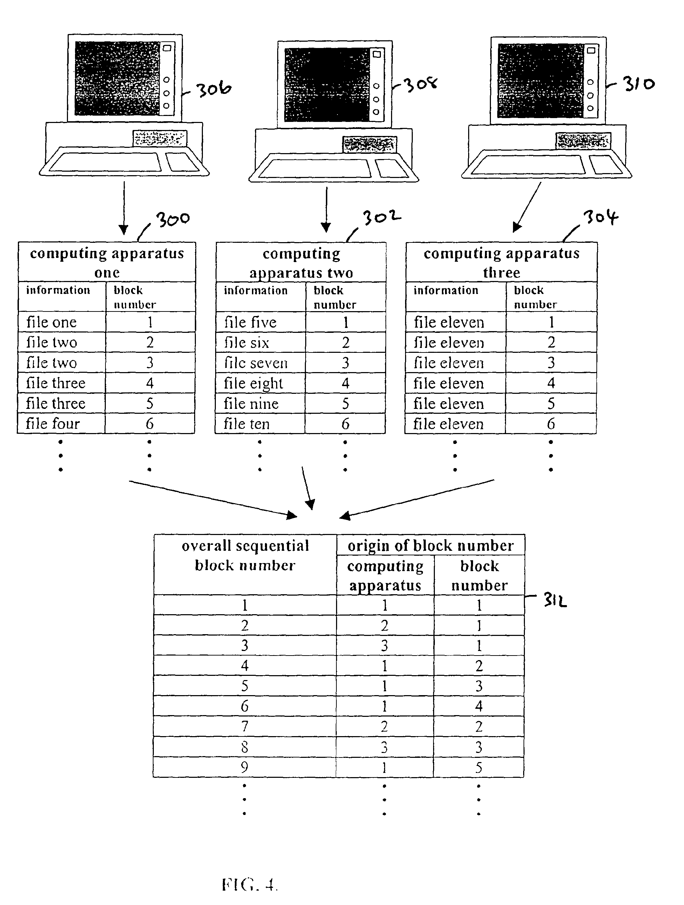

The skilled person will appreciate that there are a number of ways in which the multiplexing device could track the origin of the data. One such arrangement is illustrated in Figure 4. In this embodiment the computing apparatus connected to the multiplexing device are arranged to send data in blocks of a fixed length (64 kbytes per block may be convenient). The multiplexing device maintains a table 300, 302, 304 associated with each of the computing apparatus 306, 308, 310 connected thereto. Each of such tables 300,302,304 records the contents of each of the blocks sent from a particular computing apparatus to the multiplexing device.

Each file sent to the multiplexing apparatus occupies a minimum of one block and may take multiple blocks. As an example file one sent from computing apparatus one 306 was sent in the first block from that computing apparatus and could be contained in a single block. This is recorded in the first row of data in table 300. However, file three sent from computing apparatus one 306 required two blocks to send and was sent in the fourth and fifth blocks. This is shown in the fourth and fifth rows of data in table 300.

Further, the multiplexing device maintains an overall summary table 312 containing a sequential list of the blocks sent to the storage apparatus and also the contents of each of these blocks. Thus, the first entry of the overall summary table may state that the first block sent to the storage apparatus was the first block sent by the first computing apparatus; the second block sent was the first block sent by the second computing apparatus.

Thus, in relation to any one of the computing apparatus 306, 308, 310 the specific table 300, 302, 304 for that apparatus in connection with the overall summary table 312 will allow a specified piece of information, or file, to be recovered. To recover a file a request is made for that particular file. Using the first table associated with a computing apparatus 300, 302, 304 it will be possible to determine in just what block of data sent to the multiplexing device this information was contained. Then, using the overall summary table 312, it will be possible to determine just in which block of data sent to the storage apparatus this file was contained.

It would be possible for the multiplexing device to send information received from the computing apparatus directly to the storage apparatus if information identifying where particular information originated were also sent to the storage apparatus. The identifying information would allow the information to be returned to the computing apparatus from which it originated. One method of achieving this would be to send a header with each block sent to the storage apparatus. In one embodiment the header contains two pieces of information which would allow it to be restored: the block number relative to a particular computing apparatus (i.e. whether it was the first second or third block, etc. sent by a particular computing apparatus), and the overall block number of data sent to the storage apparatus.

In the embodiment just discussed the tracking of data that is sent to the multiplexing device may be thought of as a flat file system. In another embodiment the tracking of data sent to the multiplexing device may be achieved by the use of a database. SQL may be used to look up where data is stored on the back up device and to subsequently restore data to the correct computing device.

In embodiments where the tracking information is maintained in allocation tables, or a database it is important that this information is not lost. Therefore, this information may be written to the storage apparatus associated with the multiplexing device to ensure that it is not lost should the multiplexing device itself suffer a failure of some description.

These embodiments are in contrast to the case where a computer is connected via a SCSI bus to a conventional tape drive in which case the computing apparatus maintains control of the bus in order that its data is continuous on the tape. If a second computing apparatus were to interrupt and store its own data within the data of the first computing apparatus there would be no way of knowing from which of the computing apparatus the data originated.

As the CD-ROM image builds within the volatile RAM 204 of the multiplexing device 10 copies of the image are written to the tape drive 210 connected to the multiplexing device 10. The CPU 200 and SCSI tape controller 207 of the multiplexing device 10 cause the correct SCSI tape commands to be issued to the tape drive 210 causing the data to be stored in the desired manner. The multiplexing device 10 is arranged such that any errors that arise in writing data to the tape drive 210 are passed back to the computing apparatus 1,2,3,4 from which the data being written originated. This allows the appropriate action to be taken by the driver software running on that computing apparatus 1,2,3,4 (which may be resending of the data, etc.).

As discussed hereinbefore, the type of tape drive that is connected to the multiplexing device 10 is irrelevant and many different types of tape drive can be connected. The multiplexing device uses a SCSI Inquiry command to identify the type of tape drive 210 to which it is attached and thereafter uses the correct standard SCSI tape commands for that particular type of tape drive 210.

It will be noted from the discussions above that the multiplexing device 10 appears as an additional drive to each computing apparatus connected thereto. This functionality allows each of the computing apparatus to boot from the multiplexing device 10 to allow for Disaster Recovery (DR). The tape drive connected to the multiplexing device 10 does not need to be a DR compliant drive since the multiplexing device 10 itself is the device that is connected to the computing apparatus and will be the device which controls what data is sent to the computing apparatus. In the event of a computing apparatus booting from the multiplexing device the correct boot image will be read from both DR and non-DR compliant tape drives.

CD-ROM devices are devices from which a boot can be performed and therefore, since the multiplexing device 10 appears to the computing apparatus as if it were a CD-ROM booting from the multiplexing device 10 is readily achievable. Further details of booting a PC type computing apparatus are laid out in the BIOS boot specification, version 1.01, January 11, 1996, by Compaq, Phoenix, and Intel.

The steps necessary for booting a PC from a CD-ROM are also discussed in WO 00/08561 and the skilled person is directed to read this discussion. However, the multiplexing device may monitor the SCSI bus to ascertain whether or not any of the computing apparatus to which it is connected are attempting to boot. If such a boot request is detected then the multiplexing device may enter a disaster recovery mode and provide the necessary information to allow that particular computing apparatus to be successfully booted. Alternatively to monitoring the SCSI bus, the multiplexing device may be provided with a button, etc. that causes it to enter a disaster recovery mode allowing a computing apparatus to be booted therefrom.

In the most preferred embodiments the CD-ROM image is extended to store information relating to which of the computing apparatus connected to the multiplexing device 10 a piece of data originated. This would effectively result in a number of virtual drives within the multiplexing device 10, with perhaps a CD-ROM image for each of the computing apparatus. The skilled person will appreciate that it would be possible to arrange the system so that any one of the computing apparatus could access any one of the CD-ROM images or to include security protocols so that a computing apparatus could only access the CD-ROM image where its data is stored. Indeed, it would be possible to arrange the system in between these two extremes wherein one of the computing apparatus can access a specified number of the CD-ROM images, but not access all of them. Such file access restrictions and permissions are well known to persons skilled in networking of computing apparatus.

In perhaps the preferred embodiment the multiplexing device is arranged so that any of the computing apparatus connected thereto can boot therefrom. As such, the multiplexing device could be used to perform Disaster Recovery for any number of the computing apparatus connected thereto. As is discussed in relation to Figure 6 the multiplexing device receives 602 and buffers commands 604 together with the ID of the computer that sent that command and can therefore receive boot requests from any or all of the computing devices connected thereto. The multiplexing device then processes these requests until each of the computing apparatus trying to boot is successfully booted.

In some and perhaps the most preferred embodiments the multiplexing device performs diagnostic tests (both self-tests and of the connection to the tape and computing apparatus). This helps to ensure that back ups of the data on the computing apparatus is performed as expected and alert users of the system to potential problems. It is possible that the results of the diagnostic tests to be displayed on the LCD screen 205 or it may be possible to pass the messages back to the computing apparatus 1,2,3,4.

It will be appreciated that the SCSI protocol provides a number of error messages that can be passed down the SCSI bus and the LCD screen 205 is, in some embodiments, capable of displaying these error messages.

In some embodiments the volatile RAM 204 of the multiplexing device 10 is replaced by another form of storage, such as a hard disk drive.

Further, rather than connecting a single tape drive 210 to the multiplexing device 10 it is possible to connect a plurality of tape drives in a Redundant Array of Inexpensive Tapes (RAIT). Such an array can be used to increase the security of the backed up data as will be readily apparent to a person skilled in the art.

## Claims

1. A method of multiplexing at least two computing apparatus to a storage apparatus comprising:
connecting each of the computing apparatus to a multiplexing device by a bus interface of each of said computing apparatus;
sending data from each of said computing apparatus and arranging said multiplexing device to multiplex said data to a storage apparatus;
arranging said multiplexing device to track the origin of said received data;
and storing said data on said storage apparatus associated with said multiplexing device.

2. A method according to claim 1 comprising backing up data held on at least one of said computing apparatus.

3. A method according to claim 1 wherein two or more of said computing apparatus are networked together by a network in addition to bus connection to said multiplexing device.

4. A method according to claim 1 wherein said computing apparatus are connected to said multiplexing apparatus by a SCSI bus.

5. A method according to claim 1 wherein said computing apparatus are connected to said multiplexing apparatus by any one of the following buses: fibre channel, USE, serial, parallel.

6. A method according to claim 1 wherein the method comprises buffering data received from said computing apparatus in a random access memory associated with said multiplexing device.

7. A method according to claim 6 wherein said memory includes any one of the following: memory, hard disc drive, tape drive, said storage apparatus or the like.

8. A method according to claim 1 wherein said multiplexing device functions as an Initial Program Load Device (IPLD).

9. A method according to claim 1 wherein said data sent from at least one of said computing apparatus is held in a format corresponding to a CD-ROM format.

10. A method according to claim 9 wherein a CD-ROM image is created for each of said computing apparatus that is connecting to said multiplexing device.

11. A method according to claim 9 wherein a single CD-ROM image is created containing information from each of said computing apparatus that is connected to said multiplexing device.

12. A method according to claim 1 wherein to track the origin of the data said multiplexing device maintains a record of from where the data sent to said multiplexing device originates.

13. A method according to claim 1 wherein said multiplexing device adds origin information to data sent to said storage apparatus allowing the origin of said data to be tracked.

14. A method according to claim 1 wherein at least one of said computing apparatus connected to said multiplexing device can be booted from its connection to said multiplexing device.

15. A method according to claim 14 wherein said multiplexing device is provided with any one of the following which when activated allows at least one of said computing apparatus to be booted from the connection to said multiplexing device: switch, button, or the like.

16. A method according to claim 14 wherein said multiplexing device monitors said bus connecting said device to each of said computing apparatus, detecting whether at least one of said computing apparatus attempts to boot and on such detection enters a mode allowing the at least one of said computing apparatus to be booted therefrom.

17. A method according to claim 6 wherein the method allows access to said data held in said memory of said multiplexing device to be restricted to certain of said computing apparatus.

18. A method according to claim 1 wherein the method allows access to data held in said storage apparatus connected to the multiplexing device to be restricted to certain of said computing apparatus.

19. A method according to claim 1 which allows access to data multiplexed by said multiplexing device by file manipulation software of said computing apparatus.

20. A method according to claim 1 wherein each of said computing apparatus connected to said multiplexing device has software running thereon arranged to control communication with said multiplexing device.

21. A method according to claim 20 wherein said software running on said computing apparatus is arranged to send files to said multiplexing device as/after that file has been modified (a trickle back up).

22. A method according to claim 20 wherein the method performs a full back up of the files on at least one of said computing apparatus followed by subsequent trickle back up of that said apparatus.

23. A method according to claim 22 wherein said trickle back up is performed for a predetermined time before a full back up is performed.

24. A method according to claim 1 wherein said storage apparatus is a tape drive.

25. A method according to claim 24 wherein the method comprises connecting said tape drive to said multiplexing device.

26. A method according to claim 24 wherein the method comprises providing said tape drive within said multiplexing device.

27. A method according to claim 1 wherein said storage apparatus comprises a plurality of tape drives arranged in a RAIT (Redundant Array of Inexpensive Tapes).

28. A method according to claim 1 wherein said storage apparatus is any one of the following: CD-ROM, WORM drives, hard drive, DVD based media.

29. A method according to claim 1 wherein code is provided which causes a tape drive (or other storage apparatus) to provide the method.

30. A multiplexing device comprising:
an input interface capable of connecting to at least two computing apparatus;
a processor arranged to direct data received by the input interface to an output;
a memory arranged in conjunction with said processor to track the origin of data received at said input interface enabling said received data to be returned to its origin; and
said output being associated with a storage apparatus such that data received by the device is output to said storage apparatus, the arrangement being such that said data stored on the storage apparatus can be returned to its origin.

31. A device according to claim 30 wherein said input interface is capable of connecting to a SCSI bus.

32. A device according to claim 30 wherein said input interface is capable of connecting to any one of the following buses: fibre channel, USB, Firewire, serial, parallel.

33. A device according to claim 30 wherein said output is a SCSI interface.

34. A device according to claim 30 wherein said device has a storage apparatus provided therein arranged to store data received from at least one of said computing apparatus connected to said multiplexing device.

35. A device according to claim 34 wherein said storage apparatus provided within said device is any one of the following: tape drive, CD-ROM, DVD, WORM, magneto-optical storage, hard drive, any other form of media.

36. A device according to claim 34 wherein said storage apparatus is provided in an array.

37. A device according to claim 30 wherein said memory is any one of the following: a volatile Random Access Memory, a hard drive.

38. A system comprising two or more computing apparatus, a storage apparatus and a multiplexing device, each of the computing apparatus being connected to said multiplexing device using a bus and said multiplexing device multiplexing said computing apparatus to said storage apparatus with said multiplexing device arranged to track the origin of the data sent from said computing apparatus.

39. A system according to claim 38 wherein said storage apparatus comprises at least one tape drive.

40. A system according to claim 39 wherein there are a plurality of tape drives arranged in an array.

41. A system according to claim 38 wherein said storage apparatus comprises any one of the following: CD-ROM, DVD, WORM, magneto-optical storage, hard drive, any other form of media.

42. A system according to claim 38 wherein said storage apparatus is connected to said multiplexing device by a SCSI bus.

43. A system according to claim 38 wherein said storage apparatus is connected to said multiplexing apparatus by any one of the following form of connection: serial, parallel, USB, Firewire, Fibre-channel.

44. A system according to claim 42 wherein said computing apparatus are networked together by a primary network in addition to said SCSI bus network connecting them to said multiplexing device.

45. A computing apparatus readable medium having stored therein instructions for causing a processing unit to execute the method of claim 1.

46. A computer program arranged to execute the method according to claim 1.
